Europäisches Patentamt

European Patent Office

Office européen des brevets

(19)

(11) EP 0 984 311 A2

(12) EUROPEAN PATENT APPLICATION

(43) Date of publication:
08.03.2000 Bulletin 2000/10

(51) Int Cl.⁷: G02B 6/293

(21) Application number: 99117110.9

(22) Date of filing: 31.08.1999

(84) Designated Contracting States:
AT BE CH CY DE DK ES FI FR GB GR IE IT LI LU
MC NL PT SE
Designated Extension States:
AL LT LV MK RO SI

(30) Priority: 01.09.1998 US 144448

(71) Applicant: JDS FITEL INC.
Nepean, Ontario K2G 5W8 (CA)

(72) Inventor: Yihao, Cheng
Kanata, Ontario K2M 2L6 (CA)

(74) Representative: Frei, Alexandra Sarah
Frei Patentanwaltsbüro
Postfach 768
8029 Zürich (CH)

(54) Optical multiplexor/demultiplexor

(57) A multiplexor/demultiplexor employs a bulk grating, an array of input/output waveguides, and a lens between the grating and the array of waveguides. A concentrator chip is disposed between the array of waveguides and the lens for providing closely spaced waveguides for transmitting/receiving light to/from the lens in a multiplexing/demultiplexing mode of operation respectively. At another end of the concentrator chip waveguides are less closely spaced to couple with the array of input/output waveguides. Since the core separation of the of the cores of the receiving waveguides (in a demultiplexing mode) is inversely proportional to the bandwidth of the demultiplexed channels, providing closely spaced cores provides wide bandwidth separated channels.

Fig. 4a

## Description

## Field the Invention

This invention relates to a diffraction grating that may be used as a spectrometer, a demultiplexor or a multiplexor.

## Background Art

In wavelength division multiplexed optical communication systems, many different optical wavelength carriers provide independent communication channels in a single optical fiber. Future computation and communication systems place ever-increasing demands upon communication link bandwidth. It is generally known that optical fibers offer much higher bandwidth than conventional coaxial communication; furthermore a single optical channel in a fiber waveguide uses a microscopically small fraction of the available bandwidth of the fiber (typically a few GHz out of several tens of THz). By transmitting several channels at different optical wavelengths into an fiber (i.e., wavelength division multiplexing, or WDM), this bandwidth may be more efficiently utilized.

There have been many attempts to develop a compact, high resolution waveguide demultiplexor or spectrometer for application in areas such as spectroscopy, optical networks and optical links and more particularly optical communication systems. Such a demultiplexor can be extremely critical in wavelength division multiplexing (WDM) links. In these links or networks, each channel is assigned a distinct and unique wavelength for data transmission. Thus, the optical fiber that connects channels in a WDM network carries many discrete wavelength channels and a particular wavelength is selected before the data is received. The data reception can be achieved by combining a wavelength demultiplexor, photodetectors and electronic selection circuitries. In WDM links, many wavelengths are multiplexed and transmitted through a single optical fiber to increase the capacity of the fiber. The receiver must demultiplex the many wavelengths and select the proper channel for reception. In these applications, the requirements on the wavelength demultiplexor are currently: an optical bandwidth $\cong$ 0.4 nm, a wavelength resolution of $\cong$ 0.8 nm, polarization insensitivity, compactness, low loss, low crosstalk, and a low manufacturing cost.

At present, there are many known methods of selecting particular wavelengths, however, none are ideal for the applications outlined above. Such methods rely either on bulk optics or waveguide structures where the frequency selective element is either an interference grating or a Fabry-Perot (F-P) cavity. Diffraction gratings have been known for many years and produce a high resolution spectrum where the wavelength is a function of the diffracted angle. Thus a single grating can demultiplex many wavelengths. Bulk optics such as these diffraction gratings have offered a reasonably reliable solution but have not offered the required bandwidth often providing demultiplexing with channels being too narrow for required WDM applications. The limitation of these gratings to provide wide band demultiplexed channels has been the large interspacing between cores of input or output (input/output) waveguides. For example, typically arrays of optical fibres each having an outer diameter of 125μm and a core diameter of 10μm are disposed adjacent one another in the form of a ribbon of fibres as input or output optical fibres. Such an array is disposed adjacent a diffraction grating and serves as a group of receiving fibres in a demultiplexor configuration. A lens is generally disposed between the array of optical fibres and the diffraction grating for lensing and focusing diffracted wavelengths of light onto particular optical fibres such that each optical fibre in the array is disposed to receive a different channel or wavelength of light that has been demultiplexed by the diffraction grating. Since the $\frac{core\ diameter}{core\ separation}$ of the array of optical waveguides in such a demultiplexor is proportional to the $\frac{bandwidth}{channel\ separation}$, providing an array of optical waveguides having a closely spaced cores, i.e. little separation and a standard 10μm core size will ensure that the bandwidth will be reasonably large. This is a result of the core separation being inversely proportional to the bandwidth. Hence, if core diameter and bandwidth are fixed lessening the core separation will increase the bandwidth.

Techniques for multiplexing and demultiplexing between a single optical fiber comprising the multiplexed channel and plural optical fibers comprising the plural demultiplexed channels are described in various U.S. patents. For example, multiplexing/demultiplexing with birefringent elements is disclosed in U.S. Pat. Nos. 4,744,075 and 4,745,991. Multiplexing/demultiplexing using optical bandpass filters (such as a resonant cavity) is disclosed in U.S. Pat. Nos. 4,707,064 and 5,111,519. Multiplexing/demultiplexing with interference filters is disclosed in U.S. Pat. Nos. 4,474,424 and 4,630,255 and 4,735,478. Multiplexing/demultiplexing (multiplexing or demultiplexing) using a prism is disclosed in U.S. Pat. No. 4,335,933. U.S. Pat. No. 4,740,951 teaches a complex sequence of cascaded gratings to demultiplex plural optical signals. U.S. Pat. Nos. 4,756,587 and 4,989,937 and 4,690,489 disclose optical coupling between adjacent waveguides to achieve a demultiplexing function. A similar technique is disclosed in U.S. Pat. No. 4,900,118. Unfortunately, the foregoing techniques are limited by their discrete components to a small number of wavelengths in the multiplexed channel.

One way of overcoming such a limitation is to employ diffraction gratings to perform the multiplexing and demultiplexing functions as is shown by U.S. Pat. Nos. 4,111,524 and 4,993,796. Heretofore, close spacing of the multiplexed and demultiplexed channels makes fabrication awkward and increases the likelihood of cross-talk. One way of overcoming this latter difficulty is to employ a curved diffraction grating which reflects the incoming signal at right angles. These curved gratings are known as Echelle gratings. Various such gratings are described in US Pat. No. 5,206,920 in the name of Cremer et al; Appl Phys Lett Vol. 58 No. 18 May 1991 p1949 Soole et al; Phot. Tech. Letts. Vol. 4 No.1 1992 p 108 Cremer et al.; Appl Phys Lett Vol. 61 No.23 Dec. 1992 p 2750 Soole et al.; Elec. Letts. March 1994 vol. 30 No. 6 p 512 Poguntke et al.; Elec. Letts. Sept. 1994 Vol. 30 no.19 p 1625 Cremer et al; and, Phot. Tech. Letts. Vol. 6 no. 9 p 1109 Clemens et al. The manufacture of Echelle gratings is dependent upon etching of high quality facets with well controlled side-wall angle and low rounding.

Limitations in fabrication of these gratings have been overcome in a technique in which a diffraction grating is combined with a lens, as disclosed in U. S. Pat. Nos. 4,777,663; 4,839,884; 4,367,040 and 4,739,501. The advantage of the lens and grating combination is that the plural optical fibers of the demultiplexed channels may interface directly with the single optical fiber of the multiplexed channel through the grating and lens combination.

Thus, there is a need for compact, manufacturable wavelength division multiplexing (WDM) device for telecommunications purposes and for other applications such as compact spectrometers which provide wide band channels.

It is therefore an object of this invention to provide a diffraction grating that is relatively inexpensive to manufacture and compact.

It is an object of this invention to provide a multiplexor or demultiplexor capable of demultiplexing relatively closely spaced channels each having a relatively wide bandwidth.

It is a further object of the invention to provide a multiplexor or demultiplexor having in input/output fibre having a different mode field diameter than that of the waveguides of a concentrator chip for receiving/ transmitting signals, allowing tuning of the device during manufacture.

## Summary of the Invention

In accordance with the invention, an optical demultiplexor is provided comprising:

a wavelength dispersive optical element for separating a beam into demultiplexed beams of light;
an output array of optical waveguides each waveguide having a core and a cladding region about the core, adjacent waveguides having at least a first predetermined distance x between their cores, the output array of optical waveguides disposed to receive different wavelengths of light to the wavelength dispersive optical element;
a concentrator having an array of waveguides being closely spaced at a first output end and less closely spaced a second input end for receiving separate wavelengths of light from the wavelength dispersive element and for transmitting said light to the array of optical waveguides, the waveguides at the first end having a predetermined distance of less than x between cores of adjacent waveguides and at the second end the waveguides being spaced to substantially match the input array of optical waveguides; and,
a lens disposed between the wavelength dispersive optical element and the concentrator for directing light to the concentrator and subsequently to the output array of optical waveguides from the wavelength dispersive element.

In accordance with the invention there is provided, an optical multiplexor comprising:

a wavelength dispersive optical element for combining separate beams into a multiplexed beam of light;
an input array of optical waveguides each waveguide having a core and a cladding region about the core, adjacent waveguides having at least a first predetermined distance x between their cores, the input array of optical waveguides disposed to transmit different wavelengths of light to the wavelength dispersive optical element;
a concentrator having an array of waveguides being closely spaced at a first end and less closely spaced a second end for transmitting separate wavelengths of light to the wavelength dispersive element, the waveguides at the first end having a predetermined distance of less than x between cores of adjacent waveguides and at the second end the waveguides being spaced to substantially match the input array of optical waveguides; and,
a lens disposed between the wavelength dispersive optical element and the concentrator for directing light from the concentrator to the wavelength dispersive element in a multiplexing mode of operation.

In accordance with the invention there is further provided, an optical multiplexor/demultiplexor comprising:

a wavelength dispersive optical element for combining separate beams into a multiplexed beam of light or for separating a beam into demultiplexed beams of light;
an input/output array of optical waveguides each waveguide having a core and a cladding region about the core, adjacent waveguides having at least a first predetermined distance x between their cores, the input/output array of optical waveguides disposed to transmit/receive different wavelengths of light to/from the wavelength dispersive optical element;

a concentrator having an array of waveguides being closely spaced at a first end and less closely spaced a second end for transmitting/receiving separate wavelengths of light to/from the wavelength dispersive element and for receiving/providing said light from/to the array of optical waveguides, the waveguides at the first end having a predetermined distance of less than x between cores of adjacent waveguides and at the second end the waveguides being spaced to substantially match the input/output array of optical waveguides; and,

a lens disposed between the wavelength dispersive optical element and the concentrator for directing light from the concentrator to the wavelength dispersive element in a multiplexing mode of operation and for the focusing light that has been dispersed by said wavelength dispersive optical element onto the closely spaced waveguides at the first end of the concentrator in a demultiplexing mode of operation.

In accordance with the invention there is further provided an optical device for multiplexing a plurality of optical signals having different wavelengths into a multiplexed signal or for demultiplexing an optical signal into a plurality of optical signals having different wavelengths, comprising:

a concentrator block of waveguides having waveguide ends at a second end of the block that are more closely spaced than waveguide ends at a first end of the block;

a diffraction grating adjacent the second end of the block; and,

a lens disposed between the concentrator block and the diffraction grating for directing between the more closely spaced waveguides at the second end of the block and the diffraction grating.

Advantageoulsy by using a concentrator chip with waveguides closely spaced at an end adjacent a diffraction grating allows for wide band channels to be demultiplexed or in an opposite direction allows such wide band channels to be multiplexed.

Yet still further, separating an input/output optical fibre from the concentrator chip such that light entering or exiting the optical fibre does not propagate through the concentrator chip allows additional flexibility for tuning the device during manufacture.

## Brief Description of the Drawings

Exemplary embodiments of the invention will now be described in conjunction with the drawings in which:

Fig. 1a is a schematic block diagram of a conventional wavelength multiplexor/demultiplexor having an optical fibre array and a diffraction grating;

Fig. 1b is a schematic diagram of an alternative conventional wavelength multiplexor/demultiplexor having an optical fibre array and a diffraction grating;

Fig 2 is a graph of amplitude versus wavelength for the demultiplexor shown in Fig. 1;

Fig. 3 is a detailed end view of an array of optical fibres shown in Fig. 1;

Fig 4a is a schematic block diagram of a wavelength multiplexor/demultiplexor in accordance with the invention having an optical fibre array a concentrator chip and a diffraction grating;

Fig. 4b is a schematic block diagram of a wavelength multiplexor/demultiplexor in accordance with an alternative preferred embodiment of the invention having an optical fibre array a concentrator chip and a diffraction grating; and,

Fig. 5 is a graph of amplitude versus wavelength for the demultiplexor shown in Fig. 4.

## Detailed Description

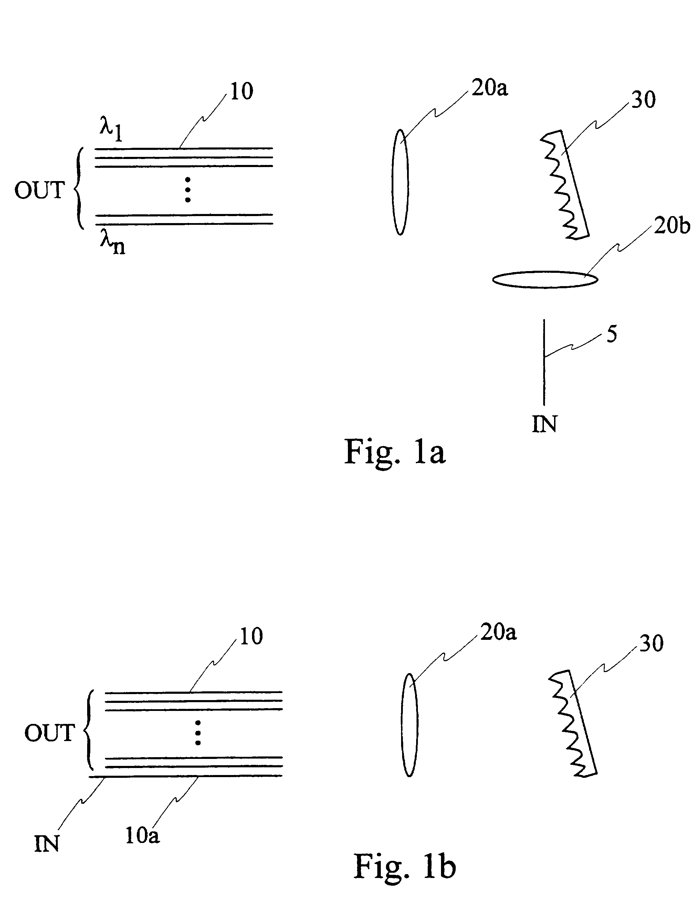

Referring now to Fig. 1a an optical demultiplexor/ multiplexor is shown operable in a first direction and first mode of operation from the input fibre 5 labeled in toward a ribbon array of output fibres 10 as a demultiplexor. Disposed between the input fibre 5 and the output fibres 10 is a wavelength dispersive element in the form of a grating 30 having etched high quality facets with well controlled side-wall angle and low rounding. Adjacent to and spaced a predetermined distance from the grating 30 is a lens 20 for focusing dispersed diffracted light in the form of spots or sub-beams onto the array 10 of output fibres such that each sub-beam couples with a particular optical fibre of the array of fibres 10. In operation, in the first demultiplexing mode of operation a multiplexed beam of light comprising a plurality of wavelengths $\lambda1.. \lambda n$ is launched into the input optical fibre 5 and propagates through free space and impinges the grating 30 where it is dispersed into sub-beams diverging at different angles depending upon wavelength. The lens 20 receives the diverging beams of light and focuses the beams at different locations along a plane where receiving ends of the waveguides 10 are located. In a reverse direction in a second mode of operation the optical circuit of Fig. 1a functions as a multiplexor when separate beams having different wavelengths are launched into the end labeled OUT of the optical fibres 10. In this mode beams of wavelengths $\lambda1$ to $\lambda n$ are launched into separate fibres 10 and are directed onto the grating 30. The beams are then combined into a single beam that is directed to the optical fibre 5 labeled IN.

Fig 1b is an alternative embodiment of the demultiplexor/multiplexor shown in Fig. 1a. In this alternative embodiment only a single lens 20a is required and optical fibre 10a is disposed adjacent to the array of fibres 10. In this embodiment alignment of the input fibre 10a with the fibres 10 through reflection via the diffraction grating 30 can be made by adjusting the angle of the diffraction grating 30 or/and, by varying the distance of the input fibre 10a and the fibres 10.

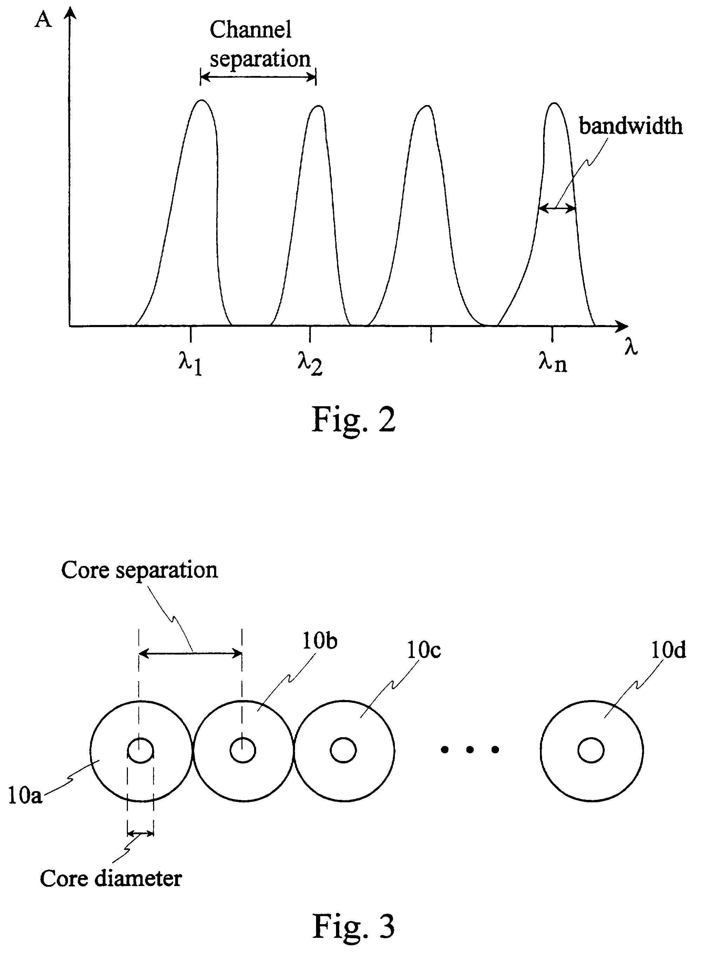

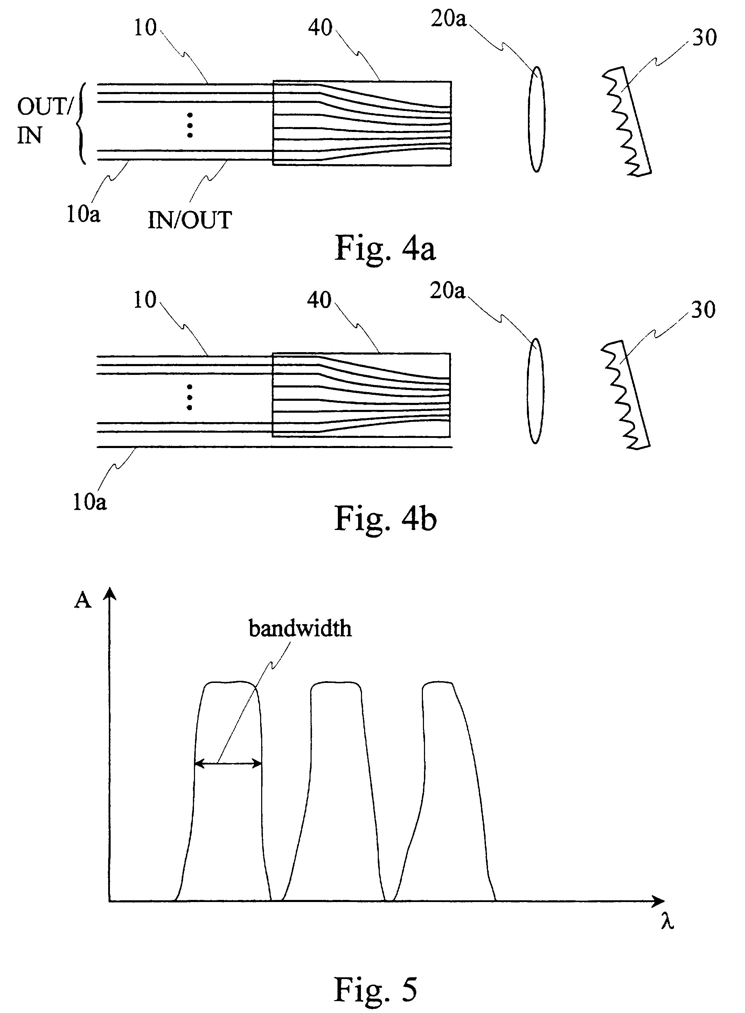

Turning now to Fig. 2, a graph of the output response of the demultiplexor/multiplexor of Fig. 1 is shown depicting the demultiplexing mode of operation. The graph indicates the channel separation and bandwidth for wavelengths $\lambda 1$ to $\lambda n$ that are demultiplexed. Fig. 5 in accordance with this invention shows a similar plot, however the bandwidth is shown to be greater than that shown in Fig. 2.

Fig. 3 is a detailed diagram of an array of optical fibres. The diameter of each core in a conventional single mode optical fibre is approximately 10μm. The diameter of each optical fibre 10 is approximately 125μm. Hence the separation between core centres of adjacent optical fibres is 125μm. As was previously stated the follow relation hold regarding core separation and bandwidth for a demultiplexor:

$$\frac{bandwidth}{channel\ separation} \propto \frac{core\ diameter}{core\ separation}$$

In order to increase the bandwidth of a grating based demultiplexor shown in Fig. 1, it is necessary to lessen the core separation between adjacent optical fibres. An embodiment of this invention, which achieves this end, is shown in Fig. 4a, wherein a concentrator chip 40 is disposed between a grating 30 and an array of waveguides 10 and an input or output waveguide 10a. The concentrator chip 40 is a block of light transmissive material such as glass having waveguides disposed therein, arranged to fan out to a dimension that is compatible for directly coupling with the array of optical fibres 10, hence, having cores spaced 125μm apart. At an opposite end of the concentrator chip 40, the waveguide ends have cores that are much closer to one another; approximately 17μm apart; the mode field diameter of the cores being about 10μm and substantially constant throughout the concentrator chip. The waveguides within the concentrator chip can be provided by ion implantation or any other method that will enable a suitable refractive index change within the transparent substrate. The operation of the optical circuit shown in Fig.4a is similar to that of the circuit in Fig. 1b, however, the lens is adapted to provide focused light beams at the end of the concentrator chip 40 (the right most end) closest to the lens.

Although the circuit shown in Fig. 4a provides its intended function, an alternative embodiment shown in Fig. 4b overcomes limitations imposed by the embodiment of Fig. 4a. In the embodiment of Fig. 4a, the input optical fibre 10a and the output optical fibres 10 are directly coupled with the concentrator chip 40 such that each fibre of the array of output fibres 10 and the input fibre 10a is coupled to a respective waveguide within the concentrator chip. Each of the waveguides in the exemplary embodiment shown in Fig. 4a in the concentrator chip 40 has a core diameter of about 10 μm. and the separation between cores at one end is approximately 17 μm. Since this these dimensions are fixed once the chip is fabricated, there is little or no possibility of adjusting the interchannel spacing of the demultiplexed channels demultiplexed by the device. However, in the preferred embodiment shown in Fig. 4b, the optical fibre 10a is separate from the waveguides within the concentrator chip 40 and is separate from the concentrator chip 40. Most importantly, this arrangement allows for fine-tuning of the demultiplexor/multiplexor by varying the mode field diameter (MFD) of the core of the optical fibre 10a. As the MFD of the optical fibre is lessened, the channels become slightly narrower, and conversely as the MFD of the optical fibre 10a is increased, the channels become slightly wider. Hence keeping the input/output optical fibre 10a separate from the concentrator chip as is shown in Fig. 4b, allows for fine tuning of the demultiplexor/multiplexor without discarding, redesigning, and remanufacturing the concentrator chip 40. This is a significant advantage in the manufacture of these devices. Furthermore, if an optical fibre 10a having a very large MFD is used in a system having very narrow closely spaced channels, the device can function as a multiplexor/splitter by broadening the bandwidth of the channels such that they overlap.

Fig 5 illustrates the output response of the circuit of Fig. 4a used in a demultiplexing mode of operation. Here the bandwidth is shown to be wider than in Fig. 2.

Numerous other embodiments may be envisaged without departing from the spirit and scope of the invention. For example, the in/out waveguide shown in Fig. 5 can alternatively be disposed appropriately at the end of the device adjacent to and at a non-zero angle to the array of optical fibres 10.

**Claims**

1. An optical multiplexor/demultiplexor comprising:

   a wavelength dispersive optical element for separating a beam into demultiplexed beams of light;
   an output/input array of optical waveguides each waveguide having a core and a cladding region about the core, adjacent waveguides having ends with at least a first predetermined distance x between their cores, the output/input array of optical waveguides disposed to transmit/receive different wavelengths of light to or from the wavelength dispersive optical element;
   a concentrator having an array of waveguides being closely spaced at a first output/input end and less closely spaced a second input end for transmitting/receiving separate wavelengths of light to or from the wavelength dispersive element and for transmitting/receiving said light to the output/input array of optical waveguides, the waveguides at the first output/input end having a predetermined distance of less than x between cores of adjacent waveguides and at the second end the waveguides being spaced to substantially match the output/input array of optical waveguides; and,

a lens disposed between the wavelength dispersive optical element and the concentrator for directing light to the concentrator and subsequently to the output array of optical waveguides from the wavelength dispersive element.; **characterized in that**

an output/input waveguide not directly coupled to the waveguides within the concentrator is disposed to receive/provide an output/input beam to be multiplexed/demultiplexed from/to the wavelength dispersive optical element.

2.    An optical demultiplexor/multiplexor as defined in claim 1, **characterized in that** the output/input waveguide has a mode field that is different than the mode field diameter of the array of waveguides of the concentrator.

3.    An optical device for multiplexing a plurality of optical signals having different wavelengths into a multiplexed signal or for demultiplexing an optical signal into a plurality of optical signals having different wavelengths, comprising:

a concentrator block of waveguides having waveguide ends at a second end of the block that are more closely spaced than waveguide ends at a first end of the block;

a diffraction grating adjacent the second end of the block;

a lens disposed between the concentrator block and the diffraction grating for directing between the more closely spaced waveguides at the second end of the block and the diffraction grating; and,

a plurality of optical fibres directly coupled with waveguides within the concentrator and an input/output optical fibre for receiving signals from the plurality of optical fibres or for transmitting signals to the plurality of optical fibres, **characterized in that** said input/output optical fibre being disposed adjacent to the lens such that light exiting the fibre toward the lens does not pass through the concentrator block.

4.    An optical device as defined in claim 3, **character-**

**ized in that** a mode field diameter of the input/output optical fibre is different than a mode field diameter of the waveguides within the concentrator block.

5.    A method of widening the bandwidth response of an optical demultiplexor using a wavelength dispersive optical element comprising the step of:

collecting diffracted light beams from the wavelength dispersive optical element and providing said collected light to a concentrator block having a plurality of waveguides therein, having a substantially similar mode field diameter **characterized in the further step of** providing light to the wavelength dispersive element by launching a beam into an optical fibre separate from the concentrator block, said optical fibre having a mode field diameter different from the mode field diameter of the plurality of waveguides.

6.    A method of tuning a demultiplexor/multiplexor including a wavelength dispersive optical element for separating a beam into demultiplexed beams of light;

an output/input array of optical waveguides each waveguide having a core and a cladding region about the core, adjacent waveguides having ends with at least a first predetermined distance x between their cores, the output/input array of optical waveguides disposed to transmit/receive different wavelengths of light to or from the wavelength dispersive optical element;

a concentrator having an array of waveguides being closely spaced at a first output/input end and less closely spaced a second input end for transmitting/receiving separate wavelengths of light to or from the wavelength dispersive element and for transmitting/receiving said light to the output/input array of optical waveguides, the waveguides at the first output/input end having a predetermined distance of less than x between cores of adjacent waveguides and at the second end the waveguides being spaced to substantially match the output/input array of optical waveguides; and,

a lens disposed between the wavelength dispersive optical element and the concentrator for directing light to the concentrator and subsequently to the output array of optical waveguides from the wavelength dispersive element.; an output/input waveguide not directly coupled to the waveguides within the concentrator disposed to receive/provide an output/input beam to be multiplexed/demultiplexed from/to the wavelength dispersive optical element;

to adjust interchannel spacing of demultiplexed channels **characterized by the step of** varying the mode field diameter of the core of the input/output optical fibre.

Fig. 1a

Fig. 1b

Fig. 2

Fig. 3

Fig. 4a

Fig. 4b

Fig. 5